# EUROPEAN PATENT SPECIFICATION

(11) **EP 2 127 743 B1**
(45) Date of publication and mention of the grant of the patent: **16.12.2020**
(21) Application number: 08710637.3
(22) Date of filing: 30.01.2008
(51) Int. Cl.: B01J 23/31, B01D 53/86, B01J 27/199, B01J 37/04, B01J 23/28, B01J 23/30

(54) **EXHAUST GAS PURIFICATION CATALYST AND METHOD FOR PRODUCTION THEREOF**
ABGASREINIGUNGSKATALYSATOR UND VERFAHREN ZUR SEINER HERSTELLUNG
CATALYSEUR DE PURIFICATION DE GAZ D'ÉCHAPPEMENT ET PROCÉDÉ DE FABRICATION DE CELUI-CI

(30) Priority: 30.01.2007 JP 2007019289
(43) Date of publication of application: 02.12.2009
(73) Proprietor: Mitsubishi Power, Ltd., Yokohama-shi, Kanagawa 220-8401 (JP)
(72) Inventor: KATO, Yasuyoshi, Kure-shi Hiroshima 737-0029 (JP); KAI, Keiichiro, Kure-shi Hiroshima 737-0029 (JP); IMADA, Naomi, Kure-shi Hiroshima 737-0029 (JP)
(74) Representative: Jenkins, Peter David
(86) International application number: PCT/JP2008/051378
(87) International publication number: WO 2008/093713

(56) References cited:
- JP-A- S5 276 289
- JP-A- 10 230 137
- JP-A- 52 076 289
- JP-A- 53 125 286
- JP-A- 2001 096 155
- US-A- 4 565 658
- US-A- 6 087 525

## Description

### TECHNICAL FIELD

The present invention relates to an exhaust gas purification catalyst and a method of producing the same, and in particular to an exhaust gas purification catalyst which is not deteriorated even when volatile compounds such as those of phosphorus (P), arsenic (As) etc. contained in a coal exhaust gas are accumulated on the catalyst and which can prevent the increase in the rate of oxidation of SO₂ in the exhaust gas caused by these compounds, a method of producing the same, and an exhaust gas purification method using the catalyst.

### BACKGROUND ART

In recent years, there is a rapid increase in construction of coal boilers to cope with an increase in worldwide demand for energy and with inflating oil prices. Coal used herein, such as coal containing impurities such as P and As, often varies in properties unlike high-quality coal used in Japan. Particularly, American east bituminous coal often has a high content of such impurities to raise a problem that the activity of denitration catalysts used in exhaust gas purification is reduced by accumulation of P and As compounds on the catalysts. Meanwhile, it has been revealed that in PRB (Powder River Basin) coal burning boilers with few Ca compounds, P compounds though not contained in a large amount are hardly trapped by Ca compounds and thus adhere to catalysts to deteriorate them.

As the coal is diversified as described above, there are raising expectations for catalysts that are prevented from being deteriorated by P and As compounds. Meanwhile, coal that generates an exhaust gas with an SO₂ concentration of higher than 3000 ppm is increasing with deterioration in coal quality, and as for given conventional denitration catalysts, it became evident for such exhaust gas to generate a smoke with a high concentration of SO₃ by permitting oxidation of SO₂ to SO₃. Accordingly, there is strong demand for denitration catalysts which are hardly deteriorated by the volatile element compounds mentioned above and can reduce the rate of oxidation of SO₂ to a very low level.

Improvement in the durability of denitration catalysts to the volatile compounds such as P and As compounds, and suppression of the rate of oxidation of SO₂, have been studied in various fields since denitration of exhaust gas was realized (for example, Patent Documents 1 and 2).

However, the conventional catalysts often contain an increased amount of active components (for example, vanadium (V) compounds) to improve resistance to poisoning, resulting often in higher rates of oxidation of SO₂. Reduction in the rate of oxidation of SO₂ is often coped with by reducing the amount of active components, and as a result the catalysts are often deteriorated in a short time by poisoning with volatile catalytic poisons. Patent Document 1: Japanese Patent Application Laid-Open (JP-A) No. 1-111443
Patent Document 2: Japanese Patent Application Laid-Open (JP-A) No. 5-96165 JPS5276289 discloses a catalyst composition using a specific composition comprising titanium. US 4565658 discloses a process for oxidation and ammoxidation of hydrocarbons using catalysts having the formula BiMoₐV_{b}Sb_{c}Oₓ wherein a is 0.5-2, b is 0.12-3, c is 0.12-10, d is 0-0.5 and x is selected to satisfy the valence requirements of the other elements. US 6087525 discloses a catalyst for the production of unsaturated nitrites from olefins, the catalyst having the formula:

Biₐ Mo_{b} V_{c} Sb_{d} Nbₑ A_{g} Bₕ Oₓ

### DISCLOSURE OF THE INVENTION

A first object of the present invention is to overcome the problems in the prior art, to realize a catalyst which is hardly deteriorated even when volatile catalyst-poisoning compounds such as P and As are accumulated and which can reduce the rate of oxidation of SO₂ to a level as low as a fraction of that of the catalyst in the prior art, and to provide an exhaust gas purification catalyst which can maintain a high activity and a low rate of oxidation of SO₂ for a long time even with any diversified coal, a method of producing the same, and an exhaust gas purification method using the same.

In recent years, the regulation of Hg discharged from coal burning boilers etc. is tightened in the United States, thus commencing to use a method wherein metallic mercury (Hg) is removed after conversion by a denitration catalyst into mercury in an oxidized state such as mercury chloride. As a result, it is a new problem to improve the activity in oxidizing metallic mercury (Hg) in an exhaust gas into mercury in an oxidized state by using the denitration catalyst, besides to promote the denitration reaction thereby, and to prevent the catalyst from decreasing the Hg oxidation activity by volatile catalytic poisons. Accordingly, a second problem of the present invention is to provide an exhaust gas purification catalyst having a high Hg oxidation activity while maintaining a high denitration activity, poisoning resistance, and low SO₂ oxidization, a method of producing the same, and an exhaust gas purification method.

As described above, a catalyst consisting primarily of titanium, molybdenum/tungsten, and vanadium is used widely as a denitration catalyst, but the active component V has strong affinity for elements P and As belonging to the group VB, so it is said that these elements adhere to the catalyst to inactivate active sites on V. It is also considered that P and As also have strong affinity for hydroxyl groups on the surface of titanium oxide and adhere to these groups to inhibit adsorption of NH₃. Accordingly, it has been believed that it is impossible to prevent the deterioration of the catalyst caused by compounds of elements in the group VB.

However, the present inventors anticipated that Bi having a large atomic number, which is periodically advanced even in the same group as that of P and As, has a spreading electron cloud to weaken its properties as in the group VB, and arrived at an idea that the affinity of strongly poisoning P and As can be reduced by previously poisoning the catalyst with weakly poisoning Bi so that the durability of the catalyst can be increased. Based on this idea, the present inventors extensively examined the composition of a Ti-V-based catalyst wherein Bi is contained and a method of producing the same, and as a result, they found that when Bi is added in an amount selected in a specific range, the activity of the resulting catalyst is hardly reduced even if P compounds adhere to the catalyst.

More surprisingly, it was found that even when P compounds adhere to the catalyst prepared by previously poisoning it with weakly poisoning Bi, the denitration performance and the rate of oxidation of Hg of the catalyst are not reduced while the rate of oxidation of SO₂ only is significantly reduced, and the invention described in claim 1 was thereby completed. At the present stage, the mechanism for improvement in durability by addition of Bi and P compounds and for suppression of SO₂ oxidation activity is not revealed in detail, and is estimated to be based on the effect of the present invention wherein that the deterioration of a catalyst by strongly poisoning compounds is prevented by previously poisoning the catalyst with a weakly poisoning compound in the same group.

According to the present invention, there is provided an exhaust gas purification catalyst according to claim 1. Also, described herein (but not in accordance with the present invention as defined in the appended claims) is: an exhaust gas purification catalyst having a composition comprising oxides of titanium (Ti), molybdenum (Mo) and/or tungsten (W), vanadium (V) and bismuth (Bi), wherein the atomic ratio of Ti : (Mo and/or W) : V is 75 to 98.9 : 1 to 15 : 0.1 to 10 and the atomic ratio of Bi/(Mo and/or W) is 0.1 to 0.8. According to an embodiment of the present invention there is provided an exhaust gas purification catalyst (2) having a composition comprising oxides of titanium (Ti), molybdenum (Mo) and/or tungsten (W), vanadium (V), bismuth (Bi) and phosphorus (P), wherein the atomic ratio of Ti : (Mo and/or W) : V is 75 to 98.9 : 1 to 15 : 0.1 to 10, the atomic ratio of Bi/(Mo and/or W) is 0.1 to 0.8, and the content of the phosphorus oxide as P₂O₅ in the composition is more than 0 and up to 20% by weight. Also described herein (not in accordance with the present invention as defined in the appended claims) is a method of producing a catalyst, which comprises kneading titanium oxide, soluble ammonium molybdate and/or ammonium tungstate, and a soluble bismuth salt with water in advance, and then adding a vanadium compound to the mixture. According to a further embodiment of the present invention there is provided a method according to claim 2 of producing the catalyst of claim 1, which comprises kneading titanium oxide, soluble ammonium molybdate and/or ammonium tungstate, a soluble bismuth salt, and orthophosphoric acid or ammonium phosphate with water in advance, and then adding a vanadium compound to the mixture. According to a further embodiment of the invention there is provided a method of purifying an exhaust gas, which comprises reducing nitrogen oxides with NH₃ in an exhaust gas and simultaneously oxidizing metallic mercury (Hg) in the exhaust gas by using the catalyst according to claim 1.

The above-mentioned discloses a composition of a catalyst durable to P and As. According to this composition, the reduction in the activity of the catalyst upon deposition or adsorption of volatile compounds of P and As can be significantly lowered. The above-mentioned also discloses a catalyst to which a phosphorus compound was added. According to this composition, a catalyst that has reduced the rate of oxidation of SO₂ without deterioration in denitration performance and durability can be realized.

The above-mentioned methods are directed respectively to methods of producing the catalysts and comprise compounding a bismuth or phosphorus compound with titanium oxide, and a molybdenum and/or tungsten compound to form the catalyst composition described above and reacting the mixture in advance, and then adding a vanadium compound, thereby reacting the bismuth or phosphorus compound with the V compound, to enable prevention of a reduction in the performance of the catalyst. The above-mentioned also discloses an exhaust gas purification method using the catalyst compositions, wherein the reduction of nitrogen oxides with NH₃ and the oxidization of mercury can be performed simultaneously or separately in exhaust gas purification by using the present catalyst.

According to the present invention, the reduction in the denitration activity and Hg oxidization activity of the catalyst when used in an exhaust gas from low-quality coal as fuel containing volatile catalytic poisoning components such as P and As can be significantly reduced, and high performance of exhaust gas purification can be maintained for a long time. Because of a very low rate of oxidization of SO₂ in an exhaust gas, it is possible to realize an exhaust gas purification system with fewer troubles such as smoke caused by oxidization of SO₂ to SO₃, and sulfuric acid corrosion of structures.

### BEST MODE FOR CARRYING OUT THE INVENTION

It is important for the catalyst of the present invention comprise oxides of titanium (Ti), molybdenum (Mo) and/or tungsten (W), vanadium (V), bismuth (Bi) and phosphorus (P), wherein the atomic ratio of Ti : (Mo and/or W) : V is 75 to 98.9 : 1 to 15 : 0.1 to 10, the atomic ratio of Bi/(Mo and/or W) is 0.1 to 0.8, and the content of the phosphorus oxide as P₂O₅ in the composition is more than 0 and up to 20% by weight (claim 1). Particularly, the atomic ratio of Bi/(Mo or W) is important, and when the atomic ratio is too low, the effect of Bi added is not sufficient, while when the atomic ratio is too high, the Bi compound acts as a catalyst poison, resulting in failure to attain high initial performance. Usually, good results are easily produced where the ratio of Bi to Mo or W is in the range of from 0.1 to 0.8, particularly in the range of from 0.1 to 0.5.

In the respective oxides described above, the atomic ratio of Ti : (Mo and/or W) : V is preferably 85 to 97.5 : 2 to 10 : 0.5 to 5, the atomic ratio of Bi/(Mo and/or W) ratio is preferably 0.1 to 0.8, and the content of the phosphorus oxide in the composition is preferably 0.5 to 10% by weight.

The raw materials that can be used in preparation of the catalyst may be any oxides or salts of the corresponding components, but because the amount of the V compound added is smaller than the amount of the Bi compound added, direct contacting or mixing of the two compounds leads to excessive poisoning of the V compound by the Bi compound to easily reduce initial performance. It follows that when the other components excluding the V compound are mixed in advance thereby reacting TiO₂, molybdate etc. with Bi, and then V is added to the mixture, as shown in claim 2, good results are readily obtained. For this purpose, when the raw materials used are an oxide TiO₂, soluble salts of Mo, W and Bi, and metavanadate with low solubility as V, good results can be readily obtained.

When the same consideration as in Bi is given to the addition time and added material with respect to the P compound added for the purpose of reducing the rate of oxidation of SO₂, good results can be readily obtained. The effect of the phosphorus oxide is obtained when the amount of the phosphorus oxide added is in the range of more than 0 and up to 20% by weight as described above, and its larger effect can be easily obtained when the amount is not more than 6% or less by weight. When the amount of the P compound added is too large, there may raise not only a problem in the rate of oxidation of SO₂ but also deterioration in denitration performance and Hg oxidation performance.

### EXAMPLES

Hereinafter, the present invention is described in more detail by reference to the Examples.

### Example 1 (not in accordance with the present invention)

Titanium oxide (specific surface area 90 m²/g, manufactured by Ishihara Sangyo Kabushiki Kaisha, Ltd.) of 900 g, ammonium molybdate of 107 g, bismuth nitrate (Bi(NO₃)·5H₂O) of 146.5 g, silica sol (OS Sol, manufactured by Nissan Chemical Industries, Ltd.) of 404 g, and water of 50 g were introduced into a kneader and kneaded for 30 minutes. Ammonium metavanadate of 28.3 g was added to the mixture which was then kneaded for additional 40 minutes. While silica alumina-based ceramic fibers (manufactured by Toshiba Fine Flex K.K.) of 151 g were gradually added, the mixture was kneaded for 30 minutes to yield a catalyst paste with a water content of 27%. The resulting paste was placed on a metal lath substrate of 0.7 mm in thickness manufactured from an SUS430 steel plate of 0.2 mm in thickness, and then sandwiched between two polyethylene sheets and passed through a pair of pressure rollers, thereby filling meshes of the metal lath substrate with the paste. The product was air-dried and calcined at 500°C for 2 hours to give a catalyst. The composition of this catalyst is that the atomic ratio of Ti/Mo/V = 93/5/2, and the atomic ratio of Bi/Mo = 0.5.

### Example 2 (not in accordance with the present invention)

A catalyst was obtained in the same manner as in preparation of the catalyst in Example 1 except that ammonium molybdate was replaced by equimolar ammonium metatungstate.

The composition of this catalyst is that the atomic ratio of Ti/W/V = 93/5/2, and the atomic ratio of Bi/W = 0.5.

### Comparative Examples 1 and 2

Catalysts were obtained in the same manner as in preparation of the catalysts in Examples 1 and 2 except that bismuth nitrate was not added.

### Reaction Example 1

The catalysts obtained in Examples 1 and 2 and Comparative Examples 1 and 2 were cut in 100 mm × 20 mm rectangles and measured for their denitration performance under the conditions in Table 1 and for the rate of oxidation of Hg under the conditions in Table 2.

**[Table 1]**

| Items | Values |
|---|---|
| 1. Gas composition | |
| NOx | 200 ppm |
| NH₃ | 240 ppm |
| SO₂ | 500 ppm |
| O₂ | 3% |
| CO₂ | 12% |
| H₂O | 12% |
| Hg | 10 ng/L |
| 2. Gas flow rate | 3 L/min. |
| 3. Temperature | 380°C |
| 4. Amount of charged catalyst | 20 mm width × 200 mm (full length) - 1 plate |

**[Table 2]**

| Items | Values |
|---|---|
| 1. Gas composition | |
| NOx | 300 ppm |
| NH₃ | 300 ppm |
| SO₂ | 1000 ppm |
| O₂ | 3% |
| CO₂ | 12% |
| H₂O | 12% |
| Hg | 10 ng/L |
| 2. Gas flow rate | 3 L/min. |
| 3. Temperature | 380°C |
| 4. Amount of charged catalyst | 20 mm width × 200 mm (full length) - 3 plate |

In a simulation test of the deterioration of the catalyst by adhesion and accumulation of volatile compounds such as those of P and As, the catalyst was impregnated with a diluted aqueous solution of orthophosphoric acid such that the amount of P₂O₅ reached 4% by weight based on the amount of the catalyst supported in the 100 mm × 20 mm test piece, and then the catalyst was subjected to forced deterioration by burning at 350°C for 1 hour. Thereafter, the catalyst was measured for NOx removal efficiency to examine the degree of deterioration.

The results are collectively shown in Table 3. According to this table, the catalysts in Examples 1 and 2 have initial NOx removal efficiency slightly lower than in the Comparative Examples, but are prevented from undergoing the deterioration in the denitration activity and Hg oxidization activity caused by forced deterioration with impregnation with phosphoric acid, thus revealing that the catalysts have excellent durability.

**[Table 3]**

| NO | Catalyst | Composition | NOx removal efficiency (%) | | Rate of oxidation of Hg (%) | |
|---|---|---|---|---|---|---|
| | | | Initial | After deterioration with P | Initial | After deterioration |
| 1 | Example 1 | Ti/Mo/V/Bi=93/5/2/2.5 | 68 | 67 | 72 | 74 |
| 2 | Example 2 | Ti/W/V/Bi=93/5/2/2.5 | 69 | 65 | 70 | 66 |
| 3 | Comparative Example 1 | Ti/Mo/V=93/5/2 | 72 | 53 | 69 | 55 |
| 4 | Comparative Example 2 | Ti/W/V=93/5/2 | 73 | 51 | 67 | 43 |

### Examples 3 to 5

For confirming the effect of a phosphorus compound added, the catalyst (100 mm × 20 mm) in Example 1 was impregnated with predetermined amounts of an aqueous solution of orthophosphoric acid, to prepare catalysts containing P₂O₅ in amounts of 2, 4 and 6% by weight based on the catalyst component, respectively.

### Examples 6 and 7

Catalysts containing P₂O₅ in amounts of 2 and 4% by weight based on the catalyst component, respectively, were obtained in the same manner as in preparation of the catalyst in Example 1 except that an aqueous solution of orthophosphoric acid was used in place of water. These catalysts correspond to claim 1.

### Reaction Example 2

The catalysts in Examples 1 and 3 to 7 and Comparative Example 1 were compared by measuring their NOx removal efficiency and Hg oxidation rate under the conditions in Tables 1 and 2 and the rate of oxidation of SO₂ under the conditions in Table 4. The obtained results are collectively shown in Table 5.

As is evident from Table 5, it was found that the catalysts in Examples 1 to 5 and 6 to 8 have the NOx removal efficiency and Hg oxidation rate similar to those of the catalyst in Comparative Example 1, and simultaneously have the rate of oxidation of SO₂ that is as low as 1/2 to 1/10 or less relative to that of the comparative catalyst, and can significantly work for solving the problem of oxidization of SO₂ to SO₃.

The results in Examples 3 to 5 indicate that the P compound even when added later to the catalyst in Example 1 can reduce the rate of oxidation of SO₂ without causing a reduction in the activity. This result means not only that the catalyst in Example 1 is not deteriorated even if the P compound is accumulated in the catalyst during use, but also that the rate of oxidation of SO₂ is automatically reduced, thus demonstrating the epoch-making performance of the present invention.

**[Table 4]**

| Items | Values |
|---|---|
| 1. Gas composition | |
| SO₂ | 500 ppm |
| O₂ | 3% |
| 2. Gas flow rate | 1.2 L/min. |
| 3. Temperature | 380°C |
| 4. Amount of charged catalyst | 20 mm width × 200 mm (full length) - 1 plate |

**[Table 5]**

| NO | Catalyst | Composition | | Activity (%) | | |
|---|---|---|---|---|---|---|
| | | Ti/Mo/V/Bi | P₂O₅ (wt%) | Denitration | Hg oxidation | SO₂ oxidation |
| 1 | Example 1 | 93/5/2/2.5 | 0 | 68 | 72 | 2.6 |
| 2 | Example 3 | 93/5/2/2.5 | 2 | 71 | 71 | 1.0 |
| 3 | Example 4 | 93/5/2/2.5 | 4 | 67 | 71 | 0.6 |
| 4 | Example 5 | 93/5/2/2.5 | 6 | 65 | 68 | 0.4 |
| 5 | Example 6 | 93/5/2/2.5 | 2 | 72 | 74 | 0.8 |
| 6 | Example 7 | 93/5/2/2.5 | 4 | 70 | 71 | 0.3 |
| 7 | Comparative Example 1 | 93/5/2/0 | 0 | 72 | 69 | 3.6 |

### Examples 8 to 10

Catalysts were prepared in the same manner as in Example 1 except that bismuth nitrate was added in amounts of 29.3 g, 73.3 g and 234 g to the catalysts, respectively.

### Reaction Example 3

The catalysts in Example 1 and 8 to 9 and Comparative Example 1 were subjected to forced deterioration by impregnation with 4% by weight of P₂O₅, and their performance was measured before and after the forced deterioration. The obtained results are shown in Table 6. From the results, it was revealed that when the atomic ratio of Bi/(Mo or W) in the catalyst of the present invention is low, the effect of the phosphorus compound on prevention of deterioration is low, while when the atomic ratio is too high, the catalyst has improved durability but tends to decrease the denitration performance, thus indicating the validity of the numerical ranges defined in the claims.

**[Table 6]**

| NO | Catalyst | Composition | | Denitration activity (%) | |
|---|---|---|---|---|---|
| | | Ti/Mo/V/Bi | Bi/Mo ratio | Initial | After forced deterioration with P |
| 1 | Example 1 | 93/5/2/2.5 | 0.5 | 68 | 67 |
| 2 | Example 8 | 93/5/2/2.5 | 0.1 | 73 | 63 |
| 3 | Example 9 | 93/5/2/2.5 | 0.25 | 72 | 68 |
| 4 | Example 10 | 93/5/2/2.5 | 0.8 | 59 | 64 |
| 5 | Comparative Example 1 | 93/5/2/0 | 0 | 72 | 53 |

### Examples 11 to 13

Catalysts in Table 7 were prepared in the same manner as in Example 6 except that the amounts of ammonium molybdate, ammonium metavanadate and orthophosphoric acid added were changed.

### Comparative Examples 3 to 5

Catalysts having the compositions in Table 7 were prepared in the same manner as in preparation of the catalysts in Examples 11 to 13 except that bismuth nitrate was not added.

### Reaction Example 4

The catalysts obtained in Example 7 and 11 to 13 and Comparative Examples 1 and 3 to 5 were measured for their NOx removal efficiency and SO₂ oxidation rate. The results are shown in Table 7. Comparison in performance between the catalysts in the Examples and the catalysts in the Comparative Examples reveals that any catalysts in the Examples maintain NOx removal efficiency and simultaneously show the rate of oxidation of SO₂ reduced significantly to a fraction of that of the catalysts in the Comparative Examples. From these results, it was also revealed that the catalysts of the present invention are optimal as catalysts for denitration of an exhaust gas with a high concentration of SO₂.

**[Table 7]**

| NO | Catalyst | Composition | | Activity (%) | |
|---|---|---|---|---|---|
| | | Ti/Mo/V/Bi | P₂O₅ (wt%) | Denitration | SO₂ oxidation |
| 1 | Example 7 | 93/5/2/2.5 | 4 | 70 | 0.3 |
| 2 | Example 11 | 95/3/0.5/1.5 | 2 | 71 | 0.3 |
| 3 | Example 12 | 89/5/4/2 | 4 | 67 | 1.2 |
| 4 | Example 13 | 80/10/5/5 | 6 | 65 | 1.3 |
| 5 | Comparative Example 1 | 93/5/2/0 | 0 | 72 | 3.6 |
| 6 | Comparative Example 3 | 95/3/0.5/0 | 2 | 63 | 1.1 |
| 7 | Comparative Example 4 | 89/5/4/0 | 4 | 73 | 3.9 |
| 8 | Comparative Example 5 | 80/10/5/0 | 6 | 74 | 6.3 |

### Industrial Applicability

According to the present invention, the reduction in the denitration activity and Hg oxidization activity of the catalyst when used in an exhaust gas from low-quality coal as fuel containing volatile catalytic poisoning components such as P and As can be significantly reduced, and high performance of exhaust gas purification can be maintained for a long time. Because of a very low rate of oxidization of SO₂ in an exhaust gas, it is possible to realize an exhaust gas purification system with fewer troubles such as smoke caused by oxidization of SO₂ to SO₃, and sulfuric acid corrosion of structures.

## Claims

1. An exhaust gas purification catalyst having a composition comprising oxides of titanium (Ti), molybdenum (Mo) and/or tungsten (W), vanadium (V), and bismuth (Bi), wherein the atomic ratio of Ti : (Mo and/or W) : V is 75 to 98.9 : 1 to 15 : 0.1 to 10, and the atomic ratio of Bi/(Mo and/or W) is 0.1 to 0.8, wherein the catalyst further comprises phosphorous oxide and the content of the phosphorus oxide as P₂O₅ in the composition is more than 0 and up to 20% by weight.

2. A method of producing the catalyst of claim 1, which comprises kneading titanium oxide, soluble ammonium molybdate and/or ammonium tungstate, a soluble bismuth salt, and orthophosphoric acid or ammonium phosphate with water in advance, and then adding a vanadium compound to the mixture.

3. A method of purifying an exhaust gas, which comprises reducing nitrogen oxides with NH₃ in an exhaust gas and simultaneously oxidizing metallic mercury (Hg) in the exhaust gas by using the catalyst according to claim 1.

## Patentansprüche

1. Abgasreinigungskatalysator mit einer Zusammensetzung, die Oxide von Titan (Ti), Molybdän (Mo) und/oder Wolfram (W), Vanadium (V) und Bismut (Bi) aufweist, wobei das Atomverhältnis von Ti : (Mo und/oder W) : V 75 - 98,9 : 1 - 15: 0,1 - 10 beträgt und das Atomverhältnis von Bi : (Mo und/oder W) 0,1 - 0,8 beträgt, wobei der Katalysator ferner Phosphoroxid aufweist und der Gehalt des Phosphoroxids als P₂O₅ in der Zusammensetzung mehr als 0 und bis zu 20 Gew.-% beträgt.

2. Verfahren zum Herstellen des Katalysators nach Anspruch 1, das vorab ein Verkneten von Titanoxid, löslichem Ammoniummolybdat und oder Ammoniumwolframat, löslichem Bismutsalz und Orthophosphorsäure oder Ammoniumphosphat mit Wasser und dann ein Hinzufügen einer Vanadiumverbindung zum Gemisch aufweist.

3. Verfahren zum Reinigen eines Abgases, das ein Reduzieren von Stickoxiden mit NH₃ in einem Abgas und gleichzeitig ein Oxidieren von metallischem Quecksilber (Hg) im Abgas durch Verwenden des Katalysators gemäß Anspruch 1 aufweist.

## Revendications

1. Catalyseur de purification de gaz d'échappement ayant une composition comprenant des oxydes de titane (Ti), de molybdène (Mo) et / ou de tungstène (W), de vanadium (V) et de bismuth (Bi), dans lequel le rapport atomique entre Ti : (Mo et / ou W) : V vaut 75 à 98,9 : 1 à 15 : 0,1 à 10, et le rapport atomique de Bi / (Mo et / ou W) vaut 0,1 à 0,8, dans lequel le catalyseur comprend en outre de l'oxyde de phosphore et la teneur en oxyde de phosphore sous forme P₂O dans la composition est supérieure à 0 % en poids et peut aller jusqu'à 20 % en poids.

2. Procédé de production du catalyseur selon la revendication 1, lequel consiste à malaxer, à l'avance, de l'oxyde de titane, du molybdate d'ammonium soluble et / ou du tungstate d'ammonium, un sel de bismuth soluble et de l'acide orthophosphorique ou du phosphate d'ammonium avec de l'eau, puis à ajouter un composé de vanadium au mélange.

3. Procédé de purification d'un gaz d'échappement, lequel consiste à réduire des oxydes d'azote avec NH₃ dans un gaz d'échappement, et à oxyder simultanément du mercure métallique (Hg) dans le gaz d'échappement, en utilisant le catalyseur selon la revendication 1.
